# EUROPEAN PATENT SPECIFICATION

(11) **EP 4 093 076 B1**
(45) Date of publication and mention of the grant of the patent: **20.08.2025**
(21) Application number: 21175447.8
(22) Date of filing: 21.05.2021
(51) Int. Cl.: H04W 12/30, H04W 4/50, H04W 4/60, G06N 20/00, H04L 9/40

(54) **METHOD, MOBILE EQUIPMENT, AND SYSTEM FOR VULNERABILITY DETECTION AND PREVENTION IN A SIM, AND STORAGE MEDIA**
VERFAHREN, MOBILES GERÄT UND SYSTEM ZUR SCHWACHSTELLENERKENNUNG UND -VERMEIDUNG IN EINER SIM SOWIE SPEICHERMEDIEN
PROCÉDÉ, ÉQUIPEMENT MOBILE ET SYSTÈME POUR LA DÉTECTION ET LA PRÉVENTION DES VULNÉRABILITÉS DANS CARTE UNE SIM ET SUPPORTS D'ENREGISTREMENT

(43) Date of publication of application: 23.11.2022
(73) Proprietor: G-Innovations Viet Nam Joint Stock Company, Ha Noi City (VN)
(72) Inventor: Pham, Tuan Vuong, Tam Diep City (VN); Nguyen, Duc Minh, Ha Noi City (VN); Mai, Huy Toan, Ha Noi City (VN)
(74) Representative: KATZAROV S.A.

(56) References cited:
- EP-A1- 3 163 929
- IE-A2- S20 070 607
- US-A1- 2015 271 138

## Description

### TECHNICAL FIELD

The present invention refers to the technical field of security for SIM (Subscriber Identity Module) cards, or SIM, in general, using artificial intelligence (AI), and more particularly, to a method, mobile equipment, and system for vulnerability detection and prevention in a SIM, and storage media.

### BACKGROUND ART

It has been known that mobile equipments (ME), such as mobile phones, are capable of connecting to mobile phone networks (GSM - 2G, UMTS - 3G, LTE - 4G, *etc*.) to enable the transmission of data, sounds, voices, and images. In order to perform communication with the users as well as to run application programs, a mobile equipment is equipped with an application processor. For wireless connection, the mobile equipment is basically required to contain two components, which are a baseband processor and a SIM (which serves as an identifier).

In general, a SIM is provided by a network provider to a user, which is installed in the mobile equipment, the SIM serving as a low-performance embedded computer used to register mobile equipment services with the network provider. The network provider combines a single IMEI (International Mobile Equipment Identity) number of the mobile equipment and the SIM to generate an IMSI (International Mobile Subscriber Identity) number and a TMSI (Temporal Mobile Subscriber Identity) number. The TMSI and IMSI numbers are used by the mobile equipment when performing radio communication sessions with the base stations of the network provider. Logical and communicating connections between a SIM and a mobile equipment is standardized by the 3GPP in the TS 102 221 and TS 131 101 specifications. At an application level, the SIM communicates with a baseband processor or an application processor of the mobile equipment by an Application Toolkit interface of the SIM. The interface is standardized by the 3GPP organizer in the 3GPP specification TS. 131.111, ETSI TS 102 223. The Application Toolkit interface allows the SIM to send Proactive Commands to the processor of the mobile equipment. The Proactive Commands may allow the programs on the SIM to request the processor of the mobile equipment to run instructions, such as requesting to perform a call, report a location, send a message, or run any application program.

Typically, applications on the SIM are closed, since the SIM manufacturers may not publicize the SIM management system, and it is difficult for the user to access these applications when using the mobile equipment. In order to check the SIM, such as to check the functionality of the SIM. US Patent No. US 8271948 B2 provides a solution of using a computer to connect to a mobile equipment with a SIM installed therein to check the Application Toolkit function of the SIM, wherein a computer software is loaded into the SIM and another software is loaded into the computer, these softwares, upon being executed, will send an event to the SIM and request to generate Proactive Commands, e.g., proactive instructions for performing functions to be checked. Based on the performance of the functions to be checked of the mobile equipment and/or the SIM, it is determined whether results of checking functions of the SIM are valid or invalid. It is notable that this manner of checking the SIM is not convenient and may be quite complicated to common users.

There is an important factor which needs to be concerned for the SIM, that is data exchange with the SIM, which may be performed remotely through Over-the-Air (OTA) mechanism. For example, the programs on the SIM may be installed and updated via OTA mechanism through silent SMS instructions. By using such OTA mechanism, there are potential risks with regard to security for the SIM. Through the OTA mechanism, the SIM may get malicious codes and malicious programs installed by control messages. These malicious codes and programs are hidden in the SIM and may use Proactive Commands to control the mobile equipment illegally, e.g., calling, messaging, performing transaction with third parties, opening browsers, obtaining location information without the user permission or wiretapping, tracking, and installing malicious codes without the user's knowledge. Or more broadly speaking, an attacker may take advantage of the SIM vulnerabilities to employ OTA messages to control the SIM and the mobile equipment of the user/victim remotely. This causes losses of information security for the mobile equipment.

Examples of attacks on the SIM are known as WIBAttack or S@TAttack, which have influenced hundred millions of mobile equipments. It is more dangerous that the attacks on the SIM in general are non-preventable from the operating system layer of the application processor since the Proactive Commands may be sent directly to the baseband processor. Further, the vulnerabilities in the SIM are considered difficult for patching after installing the SIM in the mobile equipment for use.

To overcome the vulnerability problems of the SIM, a solution disclosed by SRLab (refer to https://srlabs.de/) provides a toolkit for detecting some known vulnerabilities in a SIM by sending check instructions to the SIM and checking the responses of the SIM. The check instructions and responses are already defined in the dataset with respect to detected vulnerabilities. A software according to a solution of SRLab is installed on a personal computer (PC) and exchanges with the SIM through a standard communication run once before installing the SIM in the mobile equipment, e.g., a mobile phone. It is notable that scanning the vulnerabilities only once does not continuously prevent security risks due to the attack instructions sent remotely to the SIM even when in use after installing the SIM in the mobile equipment. Simultaneously, this solution has been evaluated to be inconvenient and relatively complicated to common users.

To overcome security risks in use and for more convenience, a solution is provided according to US Patent Application Publication No. US 2010/0227588 A1, with the title "METHODS AND APPARATUS FOR A SIM-BASED FIREWALL," in order to build a software run on a SIM to filter and prevent malicious events originating from the network, from the mobile equipment, or from the SIM to interfaces with the external. However, in this solution there exist some problems as described below.
(i) Since this is a software run on a SIM, it may get attacked, or contain vulnerabilities like all softwares run on other SIMs, e.g., having vulnerabilities in the SIM before getting installed in the mobile equipment. The user has no permission to proactively uninstall, or execute, and control existing vulnerabilities in the software run on the SIM itself.
(ii) Since this is a software run on a SIM with very restricted hardware resources, a slow performance speed of the software may cause a loss of real-time characteristic necessary for a mobile equipment that performs communication such as a mobile phone.
(iii) It does not permit the detection of existing vulnerabilities in the software, or in some cases the SIM, since the software is located in the SIM system.

Thus, there is a demand for a solution that may overcome security risks of the SIM even when in use, which is more convenient and simpler to common users, increases real-time characteristic, and in the same time, may detect existing vulnerabilities in a SIM in a frequent and online manner even when the SIM has been installed in the mobile equipment.

US2015/0271138 Al discloses a wireless device having a SIM firewall.

### SUMMARY OF THE INVENTION

The object of the present invention is to provide a method, a mobile equipment, and a system for vulnerability detection and prevention in a SIM that overcome at least one or some of the aforementioned problems.

Another object of the present invention is to provide a method, a mobile equipment, and a system for vulnerability detection and prevention in a SIM that is more convenient and simple to common users.

Still another object of the present invention is to provide a method, a mobile equipment, and a system for vulnerability detection and prevention in a SIM that increase real-time, and may simultaneously detect existing vulnerabilities in a SIM frequently and online even when the SIM is installed in the mobile equipment.

Still another object of the present invention is to provide a method, a mobile equipment, and a system for vulnerability detection and prevention in a SIM using artificial intelligence (AI) to enhance the capabilities of vulnerability detection and prevention in a SIM.

To achieve at least the aforementioned objects, in an aspect, the present invention provides a method for vulnerability detection and prevention in a SIM, the method comprises:
generating a vulnerability detection and prevention unit for detecting and preventing vulnerabilities for the SIM, wherein the vulnerability detection and prevention unit is executed by a plurality of instructions stored on a mobile equipment where the SIM is installed, and is located in at least one secure processing region that is independent of an application processor and a baseband processor of the mobile equipment; receiving, by the vulnerability detection and prevention unit, at least one of the events, data, and instructions, wherein the events, data, and instructions are sent from the SIM to the baseband processor or the application processor, or sent from the baseband processor or the application processor to the SIM; analyzing, by the vulnerability detection and prevention unit, at least one of the received events, data, and instructions to determine whether the events, data, or instructions are associated with predetermined SIM vulnerabilities; stop, by the vulnerability detection and prevention unit, the sending of the events, data, or instructions from the SIM or to the SIM in response to determining that the events, data, or instructions are associated with predetermined SIM vulnerabilities; and sending, by the vulnerability detection and prevention unit, a warning message to the user interface of the vulnerability detection and prevention unit in response to determining that the events, data, or instructions are associated with predetermined SIM vulnerabilities.

According to an embodiment, the above method further comprises: generating a user interface of the vulnerability detection and prevention unit corresponding to the vulnerability detection and prevention unit; generating, by the vulnerability detection and prevention unit, a set comprising at least one vulnerability check proactive instruction; sending, by the user interface of the vulnerability detection and prevention unit, a request for checking the SIM to the vulnerability detection and prevention unit; sending, by the vulnerability detection and prevention unit, a set comprising at least one vulnerability check proactive instruction to the SIM in response to receiving the request for checking the SIM from the user interface; executing, by the SIM, the set comprising at least one vulnerability check proactive instruction, and sending a set comprising at least one vulnerability check result corresponding to the set comprising at least one vulnerability check proactive instruction to the vulnerability detection and prevention unit; analyzing, by the vulnerability detection and prevention unit, the set comprising at least one vulnerability check result to determine whether there are predetermined SIM vulnerabilities; and sending, by the user interface of the vulnerability detection and prevention unit, a warning message to the user about the SIM vulnerabilities in response to determining that there are predetermined SIM vulnerabilities.

According to an embodiment, the above method, before the analyzing, further comprises determining, by a mobile equipment, whether there is an event of SIM installment in the mobile equipment; and sending, by the vulnerability detection and prevention unit, the set comprising at least one vulnerability check proactive instruction to the SIM in response to determining that there is an event of SIM installment in the mobile equipment.

According to an embodiment, the vulnerability detection and prevention unit performs analyzing at least one of the received events, data, and instructions to determine whether the events, data, or instructions are associated with predetermined SIM vulnerabilities by using an artificial intelligence (AI) model using one of the events, data, and instructions as input data.

According to an embodiment, the vulnerability detection and prevention unit performs analyzing the set comprising at least one vulnerability check result to determine whether there are predetermined SIM vulnerabilities by using an artificial intelligence (AI) model using the set comprising at least one vulnerability check result as input data.

Optionally, the aforementioned AI model may be a Linear Regression model, a (Gradient) Boosting Tree model, a Pattern Matching model, a Support Vector Machine (SVM) model, and a Deep Learning model.

According to an embodiment, the above method further comprises a step of training an AI model, including collecting, by the vulnerability detection and prevention unit, a dataset comprising at least one of the events, data, instructions, vulnerability check proactive instructions, and vulnerability check results; sending, by the vulnerability detection and prevention unit, the dataset to the application processor or the baseband processor for sending to a server; and training, by the server, the AI model based on the dataset.

According to an embodiment, the above method further comprises sending, by the server, the trained AI model to the application processor or the baseband processor; sending, by the user interface of the vulnerability detection and prevention unit, a request for confirmation of whether to enable the update of the AI model sent to the vulnerability detection and prevention unit to the user; and updating, by the vulnerability detection and prevention unit, the AI model into the vulnerability detection and prevention unit in response to the user confirming to enable the update of the AI model sent to the vulnerability detection and prevention unit.

According to an embodiment, the updating, by the vulnerability detection and prevention unit, of the AI model into the vulnerability detection and prevention unit is performed automatically.

According to an embodiment, the updating of the AI model may be performed through OTA (Over-The-Air) mechanism or the Internet.

In another aspect, the present invention provides a computer-readable storage medium containing computer instructions that when executed will cause the computer to perform the above method.

In still another aspect, the present invention provides a mobile equipment including an application processor, a baseband processor, a SIM, and a vulnerability detection and prevention unit for detecting and preventing vulnerabilities for the SIM, characterized in that the vulnerability detection and prevention unit is located in at least one secure processing region that is independent of the application processor and the baseband processor; and that the vulnerability detection and prevention unit is configured to perform receiving at least one of the events, data, and instructions, the events, data, and instructions sent from the SIM to the baseband processor or the application processor, or sent from the baseband processor or the application processor to the SIM; analyze at least one of the received events, data, and instructions to determine whether the events, data, or instructions are associated with predetermined SIM vulnerabilities; and stop the sending of the events, data, or instructions from the SIM or to the SIM in response to determining that the events, data, or instructions are associated with predetermined SIM vulnerabilities.

According to an embodiment, the vulnerability detection and prevention unit is configured to be located in the trustzone of an ARM processor.

According to an embodiment, the vulnerability detection and prevention unit is configured to send a warning message to the user interface of the vulnerability detection and prevention unit in response to determining that the events, data, or instructions are associated with predetermined SIM vulnerabilities.

According to an embodiment, the user interface of the vulnerability detection and prevention unit is configured to send a request for checking the SIM to the vulnerability detection and prevention unit; the vulnerability detection and prevention unit is configured to send a set comprising at least one vulnerability check proactive instruction to the SIM in response to receiving the request for checking the SIM from the user interface; the SIM is configured to execute the set comprising at least one vulnerability check proactive instruction, and send a set comprising at least one vulnerability check result corresponding to the set comprising at least one vulnerability check proactive instruction to the vulnerability detection and prevention unit ; the vulnerability detection and prevention unit is configured to analyze the set comprising at least one vulnerability check result to determine whether there are predetermined SIM vulnerabilities; and the user interface of the vulnerability detection and prevention unit is configured to send a warning message to the user about the SIM vulnerabilities in response to determining that there are predetermined SIM vulnerabilities.

According to an embodiment, the above equipment is further configured to, before the vulnerability detection and prevention unit performs analyzing, determine whether there is an event of SIM installment in the mobile equipment; and sending, by the vulnerability detection and prevention unit, the set comprising at least one vulnerability check proactive instruction to the SIM in response to determining that there is an event of SIM installment in the mobile equipment.

In still another aspect, the present invention provides a system for vulnerability detection and prevention in a SIM, the system including the aforementioned mobile equipment and a server, wherein the vulnerability detection and prevention unit is configured to collect a dataset comprising at least one of the events, data, instructions, vulnerability check proactive instructions, and vulnerability check results, and send the dataset to the application processor or the baseband processor for sending to the server; and the server is configured to train an AI model based on the dataset.

According to an embodiment, the server is configured to send the trained AI model to the application processor or the baseband processor; the user interface of the vulnerability detection and prevention unit is configured to send a request for confirmation of whether to enable the update of the AI model sent to the vulnerability detection and prevention unit to the user; and the vulnerability detection and prevention unit is configured to update the AI model into the vulnerability detection and prevention unit in response to the user confirming to enable the update of the AI model sent to the vulnerability detection and prevention unit.

According to an embodiment, the vulnerability detection and prevention unit performs automatically updating the AI model into the vulnerability detection and prevention unit.

### BRIEF DESCRIPTION OF THE DRAWINGS

Figure 1 is a block diagram representing a mobile equipment that a method for vulnerability detection and prevention in a SIM is implemented based thereon;
Figure 2 is a flowchart representing a method for vulnerability detection and prevention in a SIM in a preferred embodiment of the present invention;
Figure 3 is a sequence diagram representing an example of the activity flow of checking and filtering a message;
Figure 4 is a sequence diagram representing an example of the activity flow of checking and filtering a Proactive Command;
Figure 5 is a sequence diagram representing an example of the activity flow of detecting the vulnerabilities in a SIM, performed by a user;
Figure 6 is a sequence diagram representing an example of the activity flow of updating an AI model used in analyzing, and detecting events, messages, data, and proactive commands consisting of malicious codes, and vulnerabilities in a SIM.

### DETAILED DESCRIPTION

Below, the advantages, effects, and nature of the present invention may may be explained through the detailed description of preferred embodiments with reference to the appended figures. However, it should be understood that these embodiments are only described by way of example to clarify the advantages of the present invention, without limiting the scope of the present invention according to the described embodiments.

First, a method for vulnerability detection and prevention in a SIM in a preferred embodiment of the present invention will be described in details. The method is implemented based on a mobile equipment 100 with a SIM 101 installed therein and communicates with a network 200 through OTA (Over-The-Air) mechanism based on mobile phone networks (GSM - 2G, UMTS - 3G, LTE - 4G, etc.), or the like.

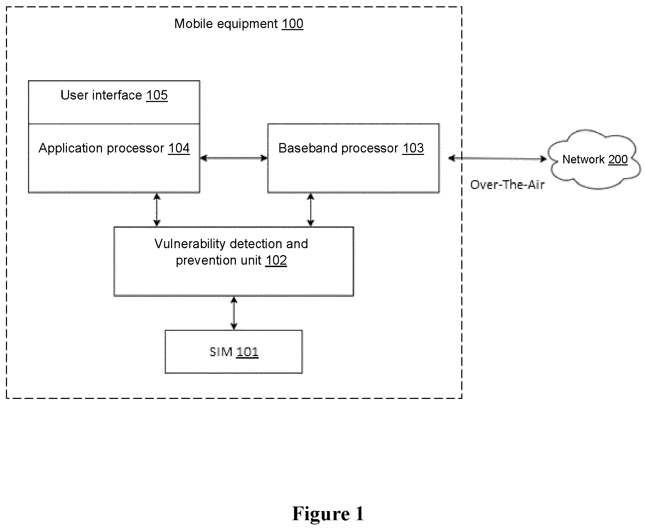

As shown in Figure 1, the mobile equipment 100 includes a SIM 101, a vulnerability detection and prevention unit 102, a baseband processor 103, an application processor 104, and a user interface 105 of the vulnerability detection and prevention unit.

Also shown in the figure, the vulnerability detection and prevention unit 102 is located in the upper layer of the SIM 101, or may be understood as located to externally surround the SIM 101 to ensure that the events, data, and instructions transferred to and from the SIM 101 all through the vulnerability detection and prevention unit 102, thereby analyzing, detecting, and filtering out insecure events, data, and instructions, such as the events, data, and instructions associated with predetermined SIM vulnerabilities, e.g., messages consisting of malicious codes.

Herein, the events, data, and instructions may be generally understood as transceived information packages occurring during the performance of the mobile equipment 100, e.g., information packages transceived between the mobile equipment 100 and the network 200, between the SIM 101 and the baseband processor 103, between the SIM 101 and the application processor 104, or other information packages. It should be noted that the information packages are not particularly limited, such as an information package not only containing a single event, data, or instruction, but may also include any combination of events, data, and instructions. In general, the terms "information package," "events," "data," "instructions" used herein are widely known in the art. For example, the vulnerability detection and prevention unit functions as a communication bridge with the SIM, the baseband processor, and the application processor through electric and logical communication, application communication in compliance with the 3GPP TS 102 221 and TS 131.111 specifications. The data, events, and instructions between the vulnerability detection and prevention unit and the SIM, the baseband processor, and the application processor in compliance with the TS 102 221 and TS 131.111 specifications. In addition, the data, events, and instructions may also be data, events, and instructions clearly described and shown in Patent Literature Nos. US 8271948 B2 and US 2010/0227588 A1, all of which may be combined with a solution provided according to the present invention by any known means.

The mobile equipment 100 may be one selected from equipments such as mobile phones, cellular phones, smart phones, satellite phones, wireless data cards, wireless personal assistant devices, wireless modems or electronic devices capable of wireless communication with a service provider to transmit and receive voices, sounds, images, data from the network provider.

The mobile equipment 100 uses the SIM 101 to register communication services with the network provider through the network 200. The SIM 100 is generally a smart card that may include one or more processors (CPU), encoding processors, read-only memories (ROM), random access memories (RAM), EEPROMs, and input/output circuits. The SIM 101 may store information on a unique subscription identifier, a network to which the subscriber may connect, communication services that the subscriber may use, or a contact list. The SIM may contain value added applications such as banking, biometrics, health, security, digital signature, public key infrastructure (PKI), multimedia, and close customer application. The SIM 101 may also implement an SAT (SIM Application Toolkit) interface or other smart card application interfaces to communicate with the mobile equipment 100 according to the specification.

The SIM 101 may be replaced by a UICC (Universal Integrated Circuit Card). The UICC may include one or more identity modules such as GSM SIM, UMTS ISIM (Internet Protocol Multimedia Services Identity Module), CDMA R-UIM (Removable User Identity Module) and value added applications. The UICC implements the USAT (Universal SIM Application Toolkit), CAT (Card Application Toolkit), CCAT (CDMA Card Application Toolkit), and UATK (UIM Application Toolkit) interfaces.

According to the preferred embodiment, the vulnerability detection and prevention unit 102 contains executable instructions stored on a mobile equipment and located in at least one secure processing region that is independent of an application processor and a baseband processor of the mobile equipment, or the vulnerability detection and prevention unit 102 may be located on a secure processing region of an already equipped baseband processor (e.g., a trustzone of an ARM processor). The secure processing region is not limited to an already equipped secure processing region, rather it may be reset or redefined depending on the technologies and supporting capabilities of different microprocessor types.

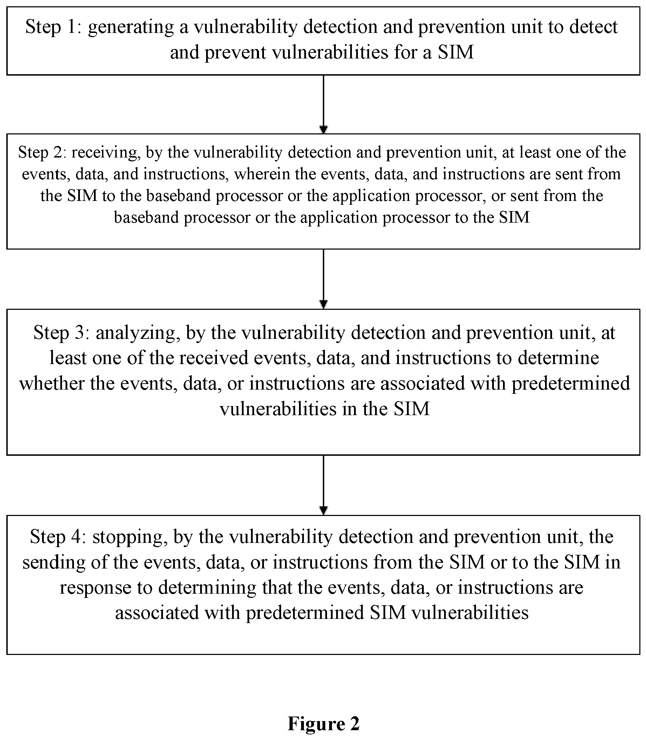

Figure 2 shows a method for vulnerability detection and prevention in a SIM according to this preferred embodiment.

As shown in the figure, the method for vulnerability detection and prevention in a SIM comprises the steps described below.

Step 1: generating a vulnerability detection and prevention unit 102 to detect and prevent vulnerabilities for a SIM 101.

In this step, the vulnerability detection and prevention unit 102 is executed by a plurality of instructions stored on the mobile equipment 100 with the SIM 101 installed therein, and located in at least one secure processing region that is independent of the application processor 104 and the baseband processor 103 of the mobile equipment 100.

Step 2: receiving, by the vulnerability detection and prevention unit 102, at least one of the events, data, and instructions, wherein the events, data, and instructions are sent from the SIM 101 to the baseband processor 103 or the application processor 104, or sent from the baseband processor 103 or the application processor 104 to the SIM 101.

Step 3: analyzing, by the vulnerability detection and prevention unit 102, at least one of the received events, data, and instructions to determine whether the events, data, or instructions are associated with predetermined vulnerabilities in the SIM 101.

Step 4: stopping, by the vulnerability detection and prevention unit, the sending of the events, data, or instructions from the SIM 101 or to the SIM 101 in response to determining that the events, data, or instructions are associated with predetermined SIM vulnerabilities.

According to an embodiment of the invention, method for vulnerability detection and prevention in a SIM may further comprise sending a warning message to the user interface of the vulnerability detection and prevention unit in response to determining that the events, data, or instructions are associated with predetermined SIM vulnerabilities.

It is notable that the vulnerability detection and prevention unit 102 may be implemented by a software/application installed in the mobile equipment 100, making it significantly convenient to use and overcoming the problems of restricted hardware resources that cause slow speed and reduction of real-time characteristic. Beside, all of the information packages sent from the SIM 101 or transmitted to the SIM 101 are processed/filtered through this software, the capabilities of detecting and processing vulnerabilities during the performance of the SIM 101 are well guaranteed.

To make it simpler while using, even to common users, the user interface 105 of the vulnerability detection and prevention unit that is installed and displayed on the mobile equipment 100 may be generated. Accordingly, the method for vulnerability detection and prevention in a SIM may further comprise:
generating a user interface 105 of the vulnerability detection and prevention unit corresponding to the vulnerability detection and prevention unit 102;
generating, by the vulnerability detection and prevention unit 102, a set comprising at least one vulnerability check proactive instruction;
sending, by the user interface 105 of the vulnerability detection and prevention unit, a request for checking the SIM to the vulnerability detection and prevention unit 102;
sending, by the vulnerability detection and prevention unit 102, a set comprising at least one vulnerability check proactive instruction to the SIM 101 in response to receiving the request for checking the SIM from the user interface 105;
executing, by the SIM 101, the set comprising at least one vulnerability check proactive instruction, and send a set comprising at least one vulnerability check response/result corresponding to the set comprising at least one vulnerability check proactive instruction to the vulnerability detection and prevention unit 102;
analyzing, by the vulnerability detection and prevention unit 102, the set comprising at least one above-mentioned vulnerability check response/result to determine whether there are predetermined vulnerabilities in the SIM 101; and
sending, by the user interface 105 of the vulnerability detection and prevention unit, a warning message to the user about the SIM vulnerabilities in response to determining that there are predetermined vulnerabilities in the SIM 101.

In a preferred embodiment, the vulnerability detection and prevention unit 102 performs the analysis to determine whether there are aforementioned vulnerabilities, which may be performed via comparing the analyzed events, data, and instructions with the events, data, and instructions having known vulnerabilities and storing in a database of vulnerabilities. If they are found identical or similar, the vulnerability detection and prevention unit 102 may provide results as specific events, data, or instructions analyzed to be associated with predetermined SIM vulnerabilities.

However, in practice, the predetermination of the vulnerabilities is not easy. Further, regarding known vulnerabilities, attackers (e.g., hackers or crackers) always change the methods or contents of the information packages associated with presumingly known vulnerabilities. For example, regarding junk messages, or messages containing malicious codes, the same message contents or malicious codes may be modified to add further information or replace some small details to no longer be the same as already known contents or malicious codes. This has led to effectiveness reduction in the comparison based on a database of vulnerabilities.

To overcome this problem, a preferred embodiment of the present invention applies artificial intelligence to perform analyzing to determine whether there are vulnerabilities. In particular, the vulnerability detection and prevention unit 102 performs the analysis to determine whether there are vulnerabilities in the SIM 101 by using an artificial intelligence (AI) model using the aforementioned events, data, instructions, vulnerability check proactive instructions, and vulnerability check results as input data.

It is known that an AI model is capable of better solving tasks of analysing and identifying different input data to provide a result with high accuracy. For example, use an AI model used in known classification tasks to classify messages into groups having malicious codes or not having malicious codes based on datasets that are events, data, instructions, vulnerability check proactive instructions and vulnerability check results labeled as training data for the AI model. It is obvious that the present invention is not limited to specific AI models, but optionally the aforementioned AI model may be an AI model that applies one of algorithms, including but not limited to, linear regression, (gradient) boosting tree, pattern matching, support vector machine (SVM), deep learning, or the like.

In general, the AI models is basically already known, the illustration and description of the specific AI models are intended for omission to avoid redundant information, and focus on the features that specify the present invention.

In a preferred embodiment, the aforementioned vulnerability detection and prevention unit 102 may load, or update the AI model from the server, and optionally, the loading, or updating of the AI model may be performed through OTA (Over-The-Air) mechanism, Internet connection, or the like. As a result, the vulnerability detection and prevention unit 102 may detect, filter, or even prevent the vulnerabilities that have not been known before.

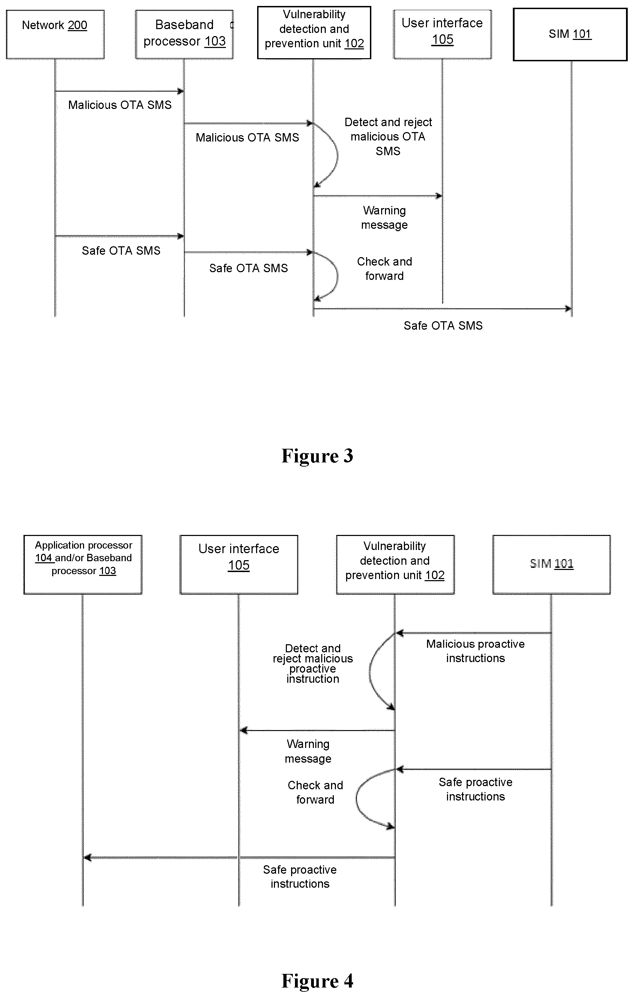

Next, examples of specific active event/status flows of the method for vulnerability detection and prevention in a SIM according to the present invention will be described based on Figures 3-6, to better specify the above-mentioned method for vulnerability detection and prevention in a SIM.

Figure 3 shows the activity flow of message checking and filtering.

As shown in the figure, it is assumed that the network 200 sends an OTA SMS containing malicious codes (a message consisting of malicious codes through OTA) to the SIM 101, which when receiving the OTA SMS containing malicious codes, the SIM 101 will execute the message contain malicious codes as the sender desires, e.g., the attacker requests to send information on the location or account number of the victim (the user of the mobile equipment 100). According to this activity flow, the message consisting of malicious codes will be sent to the baseband processor 103, and obligated to pass through the vulnerability detection and prevention unit 102 for analyzing and checking whether the message is forwarded to the SIM 101. When the vulnerability detection and prevention unit 102 analyzes and detects an OTA SMS containing malicious codes is associated with the vulnerabilities, the OTA SMS containing malicious codes will be rejected and not forwarded to the SIM 101, simultaneously the vulnerability detection and prevention unit 102 will send a warning message to the user interface 105 of the vulnerability detection and prevention unit for the user to be aware. The warning message may be audio, image, vibration messages or the like, or combination thereof.

Also shown in the figure, it is assumed that the network 200 sends a safe OTA SMS to the SIM 101, the message will be sent to the baseband processor 103, and obligated to pass through the vulnerability detection and prevention unit 102 for analyzing and checking whether the message is forwarded to the SIM 101. When the vulnerability detection and prevention unit 102 checks, analyzes, and does not detect any vulnerability, it will forward the message to the SIM 101.

Figure 4 shows the activity flow of proactive instruction checking and filtering.

As shown in the figure, it is assumed that the SIM 101 sends proactive instructions having malicious codes to the baseband processor 103 and/or the application processor 104. This may occur when vulnerabilities existing on the SIM 101. The proactive instructions having malicious codes may be directed to execute unsafe requests for the user of the mobile equipment 100 with the SIM 101 installed therein, e.g., sending the information on the location, and account number of the victim, or opening an application/a browser, performing a call, or sending a message to a specific subscriber. According to the activity flow, proactive instructions consisting of the codes are obligated to pass through the vulnerability detection and prevention unit 102 for analyzing and checking whether the instructions are forwarded to the baseband processor 103 and/or the application processor 104 for execution. When the vulnerability detection and prevention unit 102 analyzes and detects proactive instructions containing malicious codes associated with the vulnerabilities, the proactive instructions containing malicious codes will be rejected and not executed, and simultaneously the vulnerability detection and prevention unit 102 will send a warning message to the user interface 105 of the vulnerability detection and prevention unit for the user to be aware.

Also shown in the figure, it is assumed that the SIM 101 sends safe proactive instructions to the baseband processor 103 and/or the application processor 104, the instructions are obligated to pass through the vulnerability detection and prevention unit 102 for analyzing and checking whether the message is executable. When the vulnerability detection and prevention unit 102 checks, analyzes and does not detect any vulnerability, it will forward the instructions to the baseband processor 103 and/or the application processor 104 for execution.

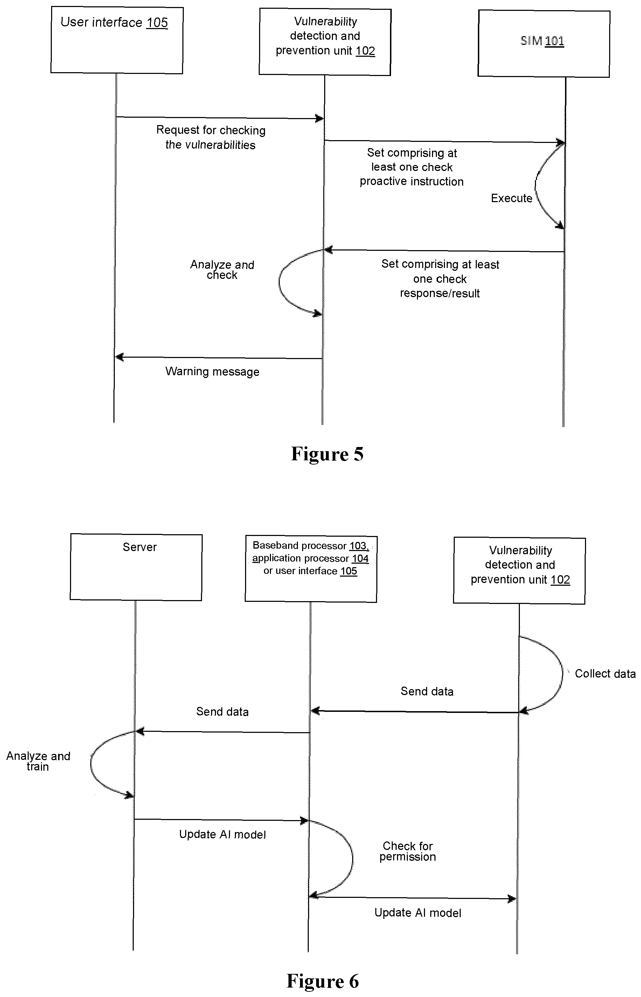

Figure 5 shows the activity flow of detecting SIM vulnerabilities performed by the user through the user interface 105 of the vulnerability detection and prevention unit.

As shown in the figure, it is assumed that the user wants to check the SIM 101, and sends a request for checking the vulnerabilities through the user interface 105 of the vulnerability detection and prevention unit to the vulnerability detection and prevention unit 102. The vulnerability detection and prevention unit 102 will generate a set comprising at least one check proactive instruction to be sent to and executed in the SIM 101, a set comprising at least one check response/result after execution in the SIM 101 will be returned to the vulnerability detection and prevention unit 102 for analyzing and checking, if the set comprising at least one check response/result is determined to be associated with any vulnerability, the user interface 105 of the vulnerability detection and prevention unit will send a warning message to the user about the SIM vulnerabilities. Of course when no vulnerability is detected, the user may also be informed through the user interface 105 of the vulnerability detection and prevention unit.

Figure 6 shows the activity flow of updating the AI model used in analyzing, detecting events, a message, data, proactive commands consisting of malicious codes, and vulnerabilities in the SIM 101.

As shown in the figure, data on the vulnerabilities including at least one of the events, data, instructions, vulnerability check proactive instructions, and vulnerability check results may be collected by the vulnerability detection and prevention unit 102. Of course the data collection is not limited to the vulnerability detection and prevention unit 102 of the mobile equipment 100 that may in general be collected from multiple different mobile equipment 100, and even multiple different sources to generate a large database, even including simulated data. Advantageously, newly detected or simulated vulnerabilities may help train new or updated AI models, and be updated for multiple different mobile equipment 100.

When the vulnerability detection and prevention unit 102 collects data, it will send the data through the baseband processor 103, the application processor 104, or the user interface 105 of the vulnerability detection and prevention unit, to a remote server. The data will be used to analyze and train for generation of the new or updated AI model. This AI model will the be updated for the vulnerability detection and prevention unit 102. The updating may be actively performed from the user request, or may be sent from the server and updated when there is user permission. According to an embodiment, the updating, by the vulnerability detection and prevention unit, of the AI model into the vulnerability detection and prevention unit may be performed automatically.

According to an embodiment illustrated on the figure, the server sends a notification to update the AI model for the vulnerability detection and prevention unit 102 through the baseband processor 103, the application processor 104, or the user interface 105 of the vulnerability detection and prevention unit, and checks the user permission, if permitted, it will perform updating the AI model for the vulnerability detection and prevention unit 102.

In a further aspect, the present invention provides a system for vulnerability detection and prevention in a SIM. In general, the system for vulnerability detection and prevention in a SIM includes a mobile equipment 100 with a SIM 101 installed therein and a server.

The server may be a centralized or decentralized server or server cluster, or a server with cloud technology application.

The mobile equipment 100 with the SIM 101 installed therein has similar features and functions to those described above, repetitions thereof are intended for omission to avoid redundancy.

In still another aspect, the present invention provides computer-readable storage medium to store computer programs consisting of instructions that execute multiple steps of the method for vulnerability detection and prevention in a SIM or generate multiple functions for the system for vulnerability detection and prevention in a SIM as described.

From above, the present invention has been described in details according to preferred embodiments. It is obvious that a person of ordinary may easily generate variations and modifications to described embodiments. Thus, these variations and modifications do not fall outside the scope of the present invention as determined in the appended claims.

## Claims

1. A method for vulnerability detection and prevention in a SIM, Subscriber Identity Module, the method comprising:
generating a vulnerability detection and prevention unit (102) for detecting and preventing vulnerabilities for the SIM (101), wherein the vulnerability detection and prevention unit (102) is executed by a plurality of instructions stored on a mobile equipment (100) where the SIM (101) is installed, and is located in at least one secure processing region that is independent of an application processor (104) of the mobile equipment (100), wherein a baseband processor of the mobile equipment is an ARM processor and the at least one secure processing region is a trustzone of the ARM processor;
receiving, by the vulnerability detection and prevention unit (102), at least one of the events, data, and instructions, wherein the events, data, and instructions are sent from the SIM (101) to the baseband processor (103) or the application processor (104), or sent from the baseband processor (103) or the application processor (104) to the SIM (101);
analyzing, by the vulnerability detection and prevention unit (102), at least one of the received events, data, and instructions to determine whether the events, data, or instructions are associated with predetermined SIM (101) vulnerabilities; and
stopping, by the vulnerability detection and prevention unit (102), the sending of the events, data, or instructions from the SIM (101) or to the SIM (101) in response to determining that the events, data, or instructions are associated with predetermined SIM (101) vulnerabilities.

2. The method according to claim 1, wherein the method further comprises sending, by the vulnerability detection and prevention unit (102), a warning message to a user interface (105) of the vulnerability detection and prevention unit (102) in response to determining that the events, data, or instructions are associated with predetermined SIM vulnerabilities.

3. The method according to claim 2, wherein the method further comprises:
sending, by the user interface (105) of the vulnerability detection and prevention unit (102), a request for checking the SIM (101) to the vulnerability detection and prevention unit (102);
sending, by the vulnerability detection and prevention unit (102), a set comprising at least one vulnerability check proactive instruction to the SIM (101) in response to receiving the request for checking the SIM (101) from the user interface (105);
executing, by the SIM (101), the set comprising at least one vulnerability check proactive instruction, and send a set comprising at least one vulnerability check result corresponding to the set comprising at least one vulnerability check proactive instruction to the vulnerability detection and prevention unit (102);
analyzing, by the vulnerability detection and prevention unit (102), the set comprising at least one vulnerability check result to determine whether there are predetermined SIM vulnerabilities; and
sending, by the user interface (105) of the vulnerability detection and prevention unit (102), a warning message to the user about the SIM vulnerabilities in response to determining that there are predetermined SIM vulnerabilities.

4. The method according to claim 3, wherein the method, before the analyzing, further comprises:
determining, by the mobile equipment (100), whether there is an event of SIM (101) installment in the mobile equipment (100); and
sending, by the vulnerability detection and prevention unit (102), the set comprising at least one vulnerability check proactive instruction to the SIM (101) in response to determining that there is an event of SIM (101) installment in the mobile equipment (100).

5. The method according to claim **1,** wherein the vulnerability detection and prevention unit (102) performs analyzing at least one of the received events, data, and instructions to determine whether the events, data, or instructions are associated with predetermined SIM vulnerabilities by using an artificial intelligence (AI) model using one of the events, data, and instructions as input data.

6. The method according to claim 3 or 4, wherein the vulnerability detection and prevention unit (102) performs analyzing the set comprising at least one vulnerability check result to determine whether there are predetermined SIM vulnerabilities or not by using an artificial intelligence (AI) model using the set comprising at least one vulnerability check result as input data.

7. The method according to claim 5 or 6, wherein the AI model is a Linear Regression model, a (Gradient) Boosting Tree model, a Pattern Matching model, a Support Vector Machine (SVM) model, and a Deep Learning model.

8. The method according to claim 7, wherein the method further comprises a step of training the AI model, the step including:
collecting, by the vulnerability detection and prevention unit (102), a dataset comprising at least one of the events, data, instructions, vulnerability check proactive instructions, and vulnerability check results;
sending, by the vulnerability detection and prevention unit (102), the dataset to the application processor (104) or the baseband processor (103) for sending to a server; and
training, by the server, the AI model based on the dataset.

9. The method according to claim 8, wherein the method further comprises:
sending, by the server, the trained AI model to the application processor (104) or the baseband processor (103);
sending, by the user interface (105) of the vulnerability detection and prevention unit (102), a request for confirmation of whether to enable the update of the AI model sent to the vulnerability detection and prevention unit (102) to the user; and
updating, by the vulnerability detection and prevention unit (102), the AI model into the vulnerability detection and prevention unit (102) in response to the user confirming to enable the update of the AI model sent to the vulnerability detection and prevention unit (102).

10. The method according to claim 8, wherein the updating, by the vulnerability detection and prevention unit (102), the AI model into the vulnerability detection and prevention unit (102) is performed automatically.

11. The method according to claim 9 or 10, wherein the updating of the AI model may be performed through OTA (Over-The-Air) mechanism or the Internet.

12. A computer-readable storage medium containing computer instructions that, when executed by a computer, cause the computer to perform the method according to any one of claims 1-11.

13. A mobile equipment (100) including an application processor (104), a baseband processor (103), a SIM (101), and a vulnerability detection and prevention unit (102) for detecting and preventing vulnerabilities for the SIM (101), **characterized in that**:
the vulnerability detection and prevention unit (102) is located in at least one secure processing region that is independent of the application processor, wherein the baseband processor is an ARM processor and the at least one secure processing region is a trustzone of the ARM processor; and
the vulnerability detection and prevention unit (102) is configured to perform:
receiving at least one of the events, data, and instructions, wherein the events, data, and instructions are sent from the SIM (101) to the baseband processor (103) or the application processor (104), or sent from the baseband processor (103) or the application processor (104) to the SIM (101);
analyzing at least one of the received events, data, and instructions to determine whether the events, data, or instructions are associated with predetermined SIM vulnerabilities; and
stopping the sending of the events, data, or instructions from the SIM (101) or to the SIM (101) in response to determining that the events, data, or instructions are associated with predetermined SIM vulnerabilities.

14. The equipment according to claim 13, wherein the vulnerability detection and prevention unit (102) is configured to send a warning message to a user interface (105) of the vulnerability detection and prevention unit (102) in response to determining that the events, data, or instructions are associated with predetermined SIM vulnerabilities.

15. The equipment according to claim 14, wherein:
the user interface (105) of the vulnerability detection and prevention unit (102) is configured to send a request for checking the SIM (101) to the vulnerability detection and prevention unit (102);
the vulnerability detection and prevention unit (102) is configured to send a set comprising at least one vulnerability check proactive instruction to the SIM (101) in response to receiving the request for checking the SIM (101) from the user interface (105);
the SIM (101) is configured to execute the set comprising at least one vulnerability check proactive instruction, and send a set comprising at least one vulnerability check result corresponding to the set comprising at least one vulnerability check proactive instruction to the vulnerability detection and prevention unit (102);
the vulnerability detection and prevention unit (102) is configured to analyze the set comprising at least one vulnerability check result to determine whether there are predetermined SIM vulnerabilities; and
the user interface (105) of the vulnerability detection and prevention unit (102) is configured to send a warning message to the user about the SIM vulnerabilities in response to determining that there are predetermined SIM vulnerabilities.

16. The equipment according to claim 15, wherein the equipment is further configured to, before the vulnerability detection and prevention unit (102) performs analyzing, determine whether there is an event of SIM (101) installment in the mobile equipment (100); and
sending, by the vulnerability detection and prevention unit (102), the set comprising at least one vulnerability check proactive instruction to the SIM (101) in response to determining that there is an event of SIM (101) installment in the mobile equipment (100).

17. The equipment according to claim 13, wherein the vulnerability detection and prevention unit (102) performs analyzing at least one of the received events, data, and instructions to determine whether the events, data, or instructions are associated with predetermined SIM vulnerabilities by using an artificial intelligence (AI) model using one of the events, data, and instructions as input data.

18. The equipment according to claim 15 or 16, wherein the vulnerability detection and prevention unit (102) performs analyzing the set comprising at least one vulnerability check result to determine whether there are predetermined SIM vulnerabilities by using an artificial intelligence (AI) model using the set comprising at least one vulnerability check result as input data.

19. The equipment according to claim 17 or 18, wherein AI the model is a Linear Regression model, a (Gradient) Boosting Tree model, a Pattern Matching model, a Support Vector Machine (SVM) model, a Deep Learning model.

20. A system for vulnerability detection and prevention in a SIM (101), the system including:
a mobile equipment (100) according to any one of claims 13-19; and
a server, wherein
the vulnerability detection and prevention unit (102) is configured to collect a dataset comprising at least one of the events, data, instructions, vulnerability check proactive instructions, and vulnerability check results, and send the dataset to the application processor (104) or the baseband processor (103) for sending to the server; and
the server is configured to train the AI model based on the dataset.

21. The system according to claim 20, wherein:
the server is configured to send the trained AI model to the application processor (104) or the baseband processor (103);
the user interface (105) of the vulnerability detection and prevention unit (102) is configured to send a request for confirmation of whether to enable the update of the AI model sent to the vulnerability detection and prevention unit (102) to the user; and
the vulnerability detection and prevention unit (102) is configured to update the AI model into the vulnerability detection and prevention unit (102) in response to the user confirming to enable the update of the AI model sent to the vulnerability detection and prevention unit (102).

22. The system according to claim 21, wherein the vulnerability detection and prevention unit (102) performs updating the AI model into the vulnerability detection and prevention unit (102) automatically.

23. The system according to claim 21 or 22, wherein the updating of the AI model may be performed through an OTA (Over-The-Air) mechanism or the Internet.

## Patentansprüche

1. Verfahren zur Schwachstellenerkennung und -vermeidung in einem SIM (Subscriber Identity Module), wobei das Verfahren umfasst:
Erzeugen einer Schwachstellenerkennungs- und -verhinderungseinheit (102) zum Erkennen und Verhindern von Schwachstellen für die SIM (101), wobei die Schwachstellenerkennungs- und -verhinderungseinheit (102) durch eine Vielzahl von Befehlen ausgeführt wird, die in einem mobilen Gerät (100) gespeichert sind, in dem die SIM (101) installiert ist, und sich in mindestens einem sicheren Verarbeitungsbereich befindet, der von einem Anwendungsprozessor (104) des mobilen Geräts (100) unabhängig ist, wobei ein Basisbandprozessor des mobilen Geräts ein ARM-Prozessor ist und der mindestens eine sichere Verarbeitungsbereich eine Trustzone des ARM-Prozessors ist;
Empfangen, durch die Schwachstellenerkennungs- und - verhinderungseinheit (102), von mindestens einem der Ereignisse, Daten und Anweisungen, wobei die Ereignisse, Daten und Anweisungen von der SIM (101) an den Basisbandprozessor (103) oder den Anwendungsprozessor (104) gesendet werden, oder von dem Basisbandprozessor (103) oder dem Anwendungsprozessor (104) an die SIM (101) gesendet werden;
Analysieren mindestens eines der empfangenen Ereignisse, Daten und Anweisungen durch die Schwachstellenerkennungs- und -verhinderungseinheit (102), um zu bestimmen, ob die Ereignisse, Daten oder Anweisungen mit vorbestimmten Schwachstellen der SIM (101) verbunden sind; und
Stoppen des Sendens der Ereignisse, Daten oder Anweisungen von der SIM (101) oder an die SIM (101) durch die Schwachstellenerkennungs- und - verhinderungseinheit (102) in Reaktion auf die Feststellung, dass die Ereignisse, Daten oder Anweisungen mit vorbestimmten SIM (101)-Schwachstellen verbunden sind.

2. Verfahren nach Anspruch 1, wobei das Verfahren ferner das Senden einer Warnmeldung durch die Schwachstellenerkennungs- und -verhinderungseinheit (102) an eine Benutzerschnittstelle (105) der Schwachstellenerkennungs- und - verhinderungseinheit (102) als Reaktion auf die Feststellung, dass die Ereignisse, Daten oder Anweisungen mit vorbestimmten SIM-Schwachstellen verbunden sind, umfasst.

3. Verfahren nach Anspruch 2, wobei das Verfahren ferner umfasst:
Senden, durch die Benutzerschnittstelle (105) der Schwachstellenerkennungs- und -verhinderungseinheit (102), einer Anforderung zur Überprüfung der SIM (101) an die Schwachstellenerkennungs- und - verhinderungseinheit (102);
Senden, durch die Schwachstellenerkennungs- und -verhinderungseinheit (102), eines Satzes, der mindestens eine proaktive Anweisung zur Schwachstellenprüfung umfasst, an die SIM (101) in Reaktion auf den Empfang der Anforderung zur Prüfung der SIM (101) von der Benutzerschnittstelle (105);
Ausführen des Satzes, der mindestens eine proaktive Anweisung zur Prüfung der Verwundbarkeit umfasst, durch die SIM (101), und Senden eines Satzes, der mindestens ein Ergebnis der Prüfung der Verwundbarkeit umfasst, das dem Satz entspricht, der mindestens eine proaktive Anweisung zur Prüfung der Verwundbarkeit umfasst, an die Einheit (102) zur Erkennung und Verhinderung von Verwundbarkeit;
Analysieren des Satzes mit mindestens einem Schwachstellenprüfungsergebnis durch die Schwachstellenerkennungs- und - verhinderungseinheit (102), um festzustellen, ob vorbestimmte SIM-Schwachstellen vorhanden sind; und
Senden, durch die Benutzerschnittstelle (105) der Schwachstellenerkennungs- und -verhinderungseinheit (102), einer Warnmeldung an den Benutzer über die SIM-Schwachstellen als Reaktion auf die Feststellung, dass es vorbestimmte SIM-Schwachstellen gibt.

4. Verfahren nach Anspruch 3, wobei das Verfahren vor dem Analysieren ferner umfasst:
Bestimmen, durch das mobile Gerät (100), ob es ein Ereignis der SIM (101)-Installation in dem mobilen Gerät (100) gibt; und
Senden, durch die Schwachstellenerkennungs- und -verhinderungseinheit (102), des Satzes, der mindestens eine proaktive Schwachstellenprüfungsanweisung umfasst, an die SIM (101) als Reaktion auf die Feststellung, dass es ein Ereignis der Installation der SIM (101) in dem mobilen Gerät (100) gibt.

5. Verfahren nach Anspruch 1, wobei die Schwachstellenerkennungs- und - verhinderungseinheit (102) eine Analyse mindestens eines der empfangenen Ereignisse, Daten und Anweisungen durchführt, um zu bestimmen, ob die Ereignisse, Daten oder Anweisungen mit vorbestimmten SIM-Schwachstellen verbunden sind, indem ein Modell der künstlichen Intelligenz (AI) verwendet wird, das eines der Ereignisse, Daten und Anweisungen als Eingangsdaten verwendet.

6. Verfahren nach Anspruch 3 oder 4, wobei die Schwachstellenerkennungs- und -verhinderungseinheit (102) eine Analyse des Satzes, der mindestens ein Schwachstellenprüfungsergebnis umfasst, durchführt, um zu bestimmen, ob vorbestimmte SIM-Schwachstellen vorhanden sind oder nicht, indem ein Modell der künstlichen Intelligenz (KI) verwendet wird, das den Satz, der mindestens ein Schwachstellenprüfungsergebnis umfasst, als Eingabedaten verwendet.

7. Verfahren nach Anspruch 5 oder 6, wobei das KI-Modell ein lineares Regressionsmodell, ein (Gradient) Boosting Tree Modell, ein Pattern Matching Modell, ein Support Vector Machine (SVM) Modell und ein Deep Learning Modell ist.

8. Verfahren nach Anspruch 7, wobei das Verfahren ferner einen Schritt des Trainings des KI-Modells umfasst, wobei der Schritt umfasst:
Sammeln, durch die Schwachstellenerkennungs- und - verhinderungseinheit (102), eines Datensatzes, der mindestens eines der Ereignisse, Daten, Anweisungen, proaktiven Schwachstellenprüfungsanweisungen und Schwachstellenprüfergebnisse umfasst;
Senden des Datensatzes durch die Schwachstellenerkennungs- und - verhinderungseinheit (102) an den Anwendungsprozessor (104) oder den Basisbandprozessor (103) zum Senden an einen Server; und
Trainieren des KI-Modells durch den Server auf der Grundlage des Datensatzes.

9. Verfahren nach Anspruch 8, wobei das Verfahren ferner umfasst:
Senden des trainierten KI-Modells durch den Server an den Anwendungsprozessor (104) oder den Basisbandprozessor (103);
Senden, durch die Benutzerschnittstelle (105) der Schwachstellenerkennungs- und -verhinderungseinheit (102), einer Anfrage zur Bestätigung, ob die Aktualisierung des an die Schwachstellenerkennungs- und - verhinderungseinheit (102) gesendeten KI-Modells für den Benutzer aktiviert werden soll; und
Aktualisieren des KI-Modells in der Schwachstellenerkennungs- und - verhinderungseinheit (102) durch die Schwachstellenerkennungs- und - verhinderungseinheit (102) in Reaktion auf die Bestätigung des Benutzers, die Aktualisierung des an die Schwachstellenerkennungs- und -verhinderungseinheit (102) gesendeten KI-Modells zu aktivieren.

10. Verfahren nach Anspruch 8, wobei das Aktualisieren des KI-Modells in der Schwachstellenerkennungs- und -verhütungseinheit (102) durch die Schwachstellenerkennungs- und -verhütungseinheit (102) automatisch durchgeführt wird.

11. Verfahren nach Anspruch 9 oder 10, wobei die Aktualisierung des KI-Modells über einen OTA-Mechanismus (Over-The-Air) oder das Internet durchgeführt werden kann.

12. Computerlesbares Speichermedium, das Computerbefehle enthält, die, wenn sie von einem Computer ausgeführt werden, den Computer veranlassen, das Verfahren nach einem der Ansprüche 1-11 durchzuführen.

13. Mobiles Gerät (100) mit einem Anwendungsprozessor (104), einem Basisbandprozessor (103), einer SIM (101) und einer Schwachstellenerkennungs- und -verhinderungseinheit (102) zum Erkennen und Verhindern von Schwachstellen für die SIM (101), **dadurch gekennzeichnet, dass**:
die Schwachstellenerkennungs- und -verhinderungseinheit (102) sich in mindestens einem sicheren Verarbeitungsbereich befindet, der von dem Anwendungsprozessor unabhängig ist, wobei der Basisbandprozessor ein ARM-Prozessor ist und der mindestens eine sichere Verarbeitungsbereich eine Trustzone des ARM-Prozessors ist; und
die Schwachstellenerkennungs- und -verhinderungseinheit (102) so konfiguriert ist, dass sie Folgendes durchführt:
Empfangen von mindestens einem der Ereignisse, Daten und Anweisungen, wobei die Ereignisse, Daten und Anweisungen von der SIM (101) an den Basisbandprozessor (103) oder den Anwendungsprozessor (104) gesendet werden oder von dem Basisbandprozessor (103) oder dem Anwendungsprozessor (104) an die SIM (101) gesendet werden;
Analysieren mindestens eines der empfangenen Ereignisse, Daten und Anweisungen, um zu bestimmen, ob die Ereignisse, Daten oder Anweisungen mit vorbestimmten SIM-Schwachstellen verbunden sind; und
Stoppen des Sendens der Ereignisse, Daten oder Anweisungen von der SIM (101) oder an die SIM (101) als Reaktion auf die Feststellung, dass die Ereignisse, Daten oder Anweisungen mit vorbestimmten SIM-Schwachstellen verbunden sind.

14. Gerät nach Anspruch 13, wobei die Schwachstellenerkennungs- und - verhinderungseinheit (102) so konfiguriert ist, dass sie eine Warnmeldung an eine Benutzerschnittstelle (105) der Schwachstellenerkennungs- und - verhinderungseinheit (102) sendet, wenn sie feststellt, dass die Ereignisse, Daten oder Befehle mit vorbestimmten SIM-Schwachstellen verbunden sind.

15. Die Ausrüstung nach Anspruch 14, wobei:
die Benutzerschnittstelle (105) der Schwachstellenerkennungs- und - verhinderungseinheit (102) so konfiguriert ist, dass sie eine Anforderung zur Überprüfung der SIM (101) an die Schwachstellenerkennungs- und - verhinderungseinheit (102) sendet;
die Schwachstellenerkennungs- und -verhinderungseinheit (102) so konfiguriert ist, dass sie als Reaktion auf den Empfang der Anforderung zur Überprüfung der SIM (101) von der Benutzerschnittstelle (105) einen Satz mit mindestens einem proaktiven Schwachstellenprüfungsbefehl an die SIM (101) sendet;
die SIM (101) ist so konfiguriert, dass sie den Satz, der mindestens eine proaktive Anweisung zur Prüfung der Verwundbarkeit umfasst, ausführt und einen Satz, der mindestens ein Ergebnis der Prüfung der Verwundbarkeit umfasst, das dem Satz entspricht, der mindestens eine proaktive Anweisung zur Prüfung der Verwundbarkeit umfasst, an die Einheit (102) zur Erkennung und Verhinderung von Verwundbarkeit sendet;
die Schwachstellenerkennungs- und -verhinderungseinheit (102) so konfiguriert ist, dass sie den Satz, der mindestens ein Schwachstellenprüfergebnis umfasst, analysiert, um zu bestimmen, ob vorbestimmte SIM-Schwachstellen vorhanden sind; und
die Benutzerschnittstelle (105) der Schwachstellenerkennungs- und - verhinderungseinheit (102) so konfiguriert ist, dass sie in Reaktion auf die Feststellung, dass es vorbestimmte SIM-Schwachstellen gibt, eine Warnmeldung an den Benutzer über die SIM-Schwachstellen sendet.

16. Gerät nach Anspruch 15, wobei das Gerät ferner so konfiguriert ist, dass es, bevor die Schwachstellenerkennungs- und -verhinderungseinheit (102) eine Analyse durchführt, feststellt, ob es ein Ereignis der Installation der SIM-Karte (101) in dem mobilen Gerät (100) gibt; und
Senden, durch die Schwachstellenerkennungs- und -verhinderungseinheit (102), des Satzes, der mindestens eine proaktive Anweisung zur Schwachstellenprüfung umfasst, an die SIM (101) als Reaktion auf die Feststellung, dass es ein Ereignis der Installation der SIM (101) in dem mobilen Gerät (100) gibt.

17. Gerät nach Anspruch 13, wobei die Schwachstellenerkennungs- und - verhinderungseinheit (102) eine Analyse mindestens eines der empfangenen Ereignisse, Daten und Anweisungen durchführt, um zu bestimmen, ob die Ereignisse, Daten oder Anweisungen mit vorbestimmten SIM-Schwachstellen verbunden sind, indem ein Modell der künstlichen Intelligenz (AI) verwendet wird, das eines der Ereignisse, Daten und Anweisungen als Eingangsdaten verwendet.

18. Vorrichtung nach Anspruch 15 oder 16, wobei die Schwachstellenerkennungs- und -verhinderungseinheit (102) eine Analyse des Satzes, der mindestens ein Schwachstellenprüfungsergebnis umfasst, durchführt, um zu bestimmen, ob vorbestimmte SIM-Schwachstellen vorhanden sind, indem ein Modell der künstlichen Intelligenz (KI) verwendet wird, das den Satz, der mindestens ein Schwachstellenprüfungsergebnis umfasst, als Eingabedaten verwendet.

19. Gerät nach Anspruch 17 oder 18, wobei das KI-Modell ein lineares Regressionsmodell, ein (Gradient) Boosting Tree Modell, ein Pattern Matching Modell, ein Support Vector Machine (SVM) Modell, ein Deep Learning Modell ist.

20. Ein System zur Erkennung und Verhinderung von Schwachstellen in einer SIM (101), wobei das System Folgendes umfasst:
ein mobiles Gerät (100) nach einem der Ansprüche 13-19; und
einen Server, wobei
die Schwachstellenerkennungs- und -verhinderungseinheit (102) so konfiguriert ist, dass sie einen Datensatz sammelt, der mindestens eines der Ereignisse, Daten, Anweisungen, proaktiven Schwachstellenprüfungsanweisungen und Schwachstellenprüfungsergebnisse umfasst, und den Datensatz an den Anwendungsprozessor (104) oder den Basisbandprozessor (103) zum Senden an den Server sendet; und
der Server so konfiguriert ist, dass er das KI-Modell auf der Grundlage des Datensatzes trainiert.

21. Das System nach Anspruch 20, wobei:
der Server konfiguriert ist, um das trainierte KI-Modell an den Anwendungsprozessor (104) oder den Basisbandprozessor (103) zu senden;
die Benutzerschnittstelle (105) der Schwachstellenerkennungs- und - verhinderungseinheit (102) so konfiguriert ist, dass sie eine Anfrage zur Bestätigung, ob die Aktualisierung des an die Schwachstellenerkennungs- und - verhinderungseinheit (102) gesendeten KI-Modells aktiviert werden soll, an den Benutzer sendet; und
die Schwachstellenerkennungs- und -verhinderungseinheit (102) so konfiguriert ist, dass sie das AI-Modell in der Schwachstellenerkennungs- und - verhinderungseinheit (102) in Reaktion auf die Bestätigung des Benutzers, die Aktualisierung des an die Schwachstellenerkennungs- und -verhinderungseinheit (102) gesendeten AI-Modells zu aktivieren, aktualisiert.

22. System nach Anspruch 21, wobei die Schwachstellenerkennungs- und - verhinderungseinheit (102) das Aktualisieren des KI-Modells in der Schwachstellenerkennungs- und -verhinderungseinheit (102) automatisch durchführt.

23. System nach Anspruch 21 oder 22, wobei die Aktualisierung des KI-Modells über einen OTA-Mechanismus (Over-The-Air) oder das Internet durchgeführt werden kann.

## Revendications

1. Méthode de détection et de prévention des vulnérabilités dans une carte SIM, module d'identification de l'abonné, la méthode comprenant :
générer une unité de détection et de prévention des vulnérabilités (102) pour détecter et prévenir les vulnérabilités pour la carte SIM (101), l'unité de détection et de prévention des vulnérabilités (102) étant exécutée par une pluralité d'instructions stockées sur un équipement mobile (100) où la carte SIM (101) est installé, et se trouvant dans au moins une région de traitement sécurisée indépendante d'un processeur d'application (104) de l'équipement mobile (100), un processeur de bande de base de l'équipement mobile étant un processeur ARM et la au moins une région de traitement sécurisée étant une zone de confiance du processeur ARM ;
réception, par l'unité de détection et de prévention des vulnérabilités (102), d'au moins un des événements, données et instructions, les événements, données et instructions étant envoyés de la carte SIM (101) au processeur de bande de base (103) ou au processeur d'application (104), ou envoyés du processeur de bande de base (103) ou du processeur d'application (104) à la carte SIM (101) ;
analyser, par l'unité de détection et de prévention des vulnérabilités (102), au moins l'un des événements, données et instructions reçus afin de déterminer si les événements, données ou instructions sont associés à des vulnérabilités prédéterminées de la carte SIM (101) ; et
l'arrêt, par l'unité de détection et de prévention des vulnérabilités (102), de l'envoi des événements, des données ou des instructions depuis la carte SIM (101) ou vers la carte SIM (101) en réponse à la détermination que les événements, les données ou les instructions sont associés à des vulnérabilités prédéterminées de la carte SIM (101).

2. Procédé selon la revendication 1, dans lequel le procédé comprend en outre l'envoi, par l'unité de détection et de prévention des vulnérabilités (102), d'un message d'avertissement à une interface utilisateur (105) de l'unité de détection et de prévention des vulnérabilités (102) en réponse à la détermination que les événements, les données ou les instructions sont associés à des vulnérabilités de la carte SIM prédéterminées.

3. Méthode selon la revendication 2, dans laquelle la méthode comprend en outre:
l'envoi, par l'interface utilisateur (105) de l'unité de détection et de prévention des vulnérabilités (102), d'une demande de vérification de la carte SIM (101) à l'unité de détection et de prévention des vulnérabilités (102) ;
envoyer, par l'unité de détection et de prévention des vulnérabilités (102), un ensemble comprenant au moins une instruction proactive de vérification de la vulnérabilité à la carte SIM (101) en réponse à la réception de la demande de vérification de la carte SIM (101) par l'interface utilisateur (105) ;
exécuter, par la carte SIM (101), l'ensemble comprenant au moins une instruction proactive de vérification de la vulnérabilité, et envoyer un ensemble comprenant au moins un résultat de vérification de la vulnérabilité correspondant à l'ensemble comprenant au moins une instruction proactive de vérification de la vulnérabilité à l'unité de détection et de prévention de la vulnérabilité (102) ;
analyser, par l'unité de détection et de prévention des vulnérabilités (102), l'ensemble comprenant au moins un résultat de contrôle de vulnérabilité pour déterminer s'il existe des vulnérabilités de la carte SIM prédéterminées ; et
envoyer, par l'interface utilisateur (105) de l'unité de détection et de prévention des vulnérabilités (102), un message d'avertissement à l'utilisateur concernant les vulnérabilités de la carte SIM en réponse à la détermination de l'existence de vulnérabilités prédéterminées de la carte SIM.

4. Procédé selon la revendication 3, dans lequel le procédé, avant l'analyse, comprend en outre :
déterminer, par l'équipement mobile (100), s'il y a un événement d'installation de la carte SIM (101) dans l'équipement mobile (100) ; et
envoyer, par l'unité de détection et de prévention des vulnérabilités (102), l'ensemble comprenant au moins une instruction proactive de vérification des vulnérabilités à la carte SIM (101) en réponse à la détermination de l'existence d'un événement d'installation de la carte SIM (101) dans l'équipement mobile (100).

5. Méthode selon la revendication 1, dans laquelle l'unité de détection et de prévention des vulnérabilités (102) analyse au moins un des événements, données et instructions reçus pour déterminer si les événements, données ou instructions sont associés à des vulnérabilités de la carte SIM prédéterminées à l'aide d'un modèle d'intelligence artificielle (IA) utilisant l'un des événements, données et instructions en tant que données d'entrée.

6. Méthode selon la revendication 3 ou 4, dans laquelle l'unité de détection et de prévention des vulnérabilités (102) analyse l'ensemble comprenant au moins un résultat de contrôle de vulnérabilité pour déterminer s'il existe ou non des vulnérabilités de la carte SIM prédéterminées à l'aide d'un modèle d'intelligence artificielle utilisant l'ensemble comprenant au moins un résultat de contrôle de vulnérabilité comme données d'entrée.

7. Méthode selon la revendication 5 ou 6, dans laquelle le modèle d'intelligence artificielle est un modèle de régression linéaire, un modèle d'arbre de stimulation (de gradient), un modèle de correspondance des formes, un modèle de machine à vecteur de support (SVM) et un modèle d'apprentissage profond.

8. Méthode selon la revendication 7, dans laquelle la méthode comprend en outre une étape d'entraînement du modèle d'IA, l'étape comprenant :
la collecte, par l'unité de détection et de prévention des vulnérabilités (102), d'un ensemble de données comprenant au moins l'un des événements, des données, des instructions, des instructions proactives de contrôle des vulnérabilités et des résultats de contrôle des vulnérabilités ;
envoyer, par l'unité de détection et de prévention des vulnérabilités (102), l'ensemble de données au processeur d'application (104) ou au processeur de bande de base (103) pour l'envoyer à un serveur ; et
formation, par le serveur, du modèle d'intelligence artificielle sur la base de l'ensemble de données.

9. Méthode selon la revendication 8, dans laquelle la méthode comprend en outre:
l'envoi, par le serveur, du modèle d'IA entraîné au processeur d'application (104) ou au processeur de bande de base (103) ;
l'envoi, par l'interface utilisateur (105) de l'unité de détection et de prévention des vulnérabilités (102), d'une demande de confirmation de l'activation ou non de la mise à jour du modèle d'IA envoyé à l'unité de détection et de prévention des vulnérabilités (102) à l'utilisateur ; et
la mise à jour, par l'unité de détection et de prévention des vulnérabilités (102), du modèle d'IA dans l'unité de détection et de prévention des vulnérabilités (102) en réponse à la confirmation par l'utilisateur de l'activation de la mise à jour du modèle d'IA envoyé à l'unité de détection et de prévention des vulnérabilités (102).

10. Méthode selon la revendication 8, dans lequel la mise à jour, par l'unité de détection et de prévention des vulnérabilités (102), du modèle d'IA dans l'unité de détection et de prévention des vulnérabilités (102) est effectuée automatiquement.

11. Méthode selon la revendication 9 ou 10, dans laquelle la mise à jour du modèle d'IA peut être effectuée par le biais d'un mécanisme OTA (Over-The-Air) ou de l'Internet.

12. Support de stockage lisible par ordinateur contenant des instructions informatiques qui, lorsqu'elles sont exécutées par un ordinateur, permettent à ce dernier de mettre en œuvre la méthode décrite dans l'une des revendications 1 à 11.

13. Équipement mobile (100) comprenant un processeur d'application (104), un processeur de bande de base (103), une carte SIM (101) et une unité de détection et de prévention des vulnérabilités (102) pour détecter et prévenir les vulnérabilités de la carte SIM (101), **caractérisé par le fait que** :
l'unité de détection et de prévention des vulnérabilités (102) est située dans au moins une région de traitement sécurisée indépendante du processeur d'application, le processeur de bande de base étant un processeur ARM et au moins une région de traitement sécurisée étant une zone de confiance du processeur ARM ; et
l'unité de détection et de prévention des vulnérabilités (102) est configurée pour effectuer ce qui suit :
recevoir au moins un des événements, données et instructions, les événements, données et instructions étant envoyés de la carte SIM (101) au processeur de bande de base (103) ou au processeur d'application (104), ou envoyés du processeur de bande de base (103) ou du processeur d'application (104) à la carte SIM (101) ;
analyser au moins l'un des événements, données et instructions reçus afin de déterminer si les événements, données ou instructions sont associés à des vulnérabilités prédéterminées de la carte SIM ; et
arrêter l'envoi des événements, des données ou des instructions de la carte SIM (101) ou vers la carte SIM (101) en réponse à la détermination que les événements, les données ou les instructions sont associés à des vulnérabilités de la carte SIM prédéterminées.

14. Équipement selon la revendication 13, dans lequel l'unité de détection et de prévention des vulnérabilités (102) est configurée pour envoyer un message d'avertissement à une interface utilisateur (105) de l'unité de détection et de prévention des vulnérabilités (102) en réponse à la détermination que les événements, les données ou les instructions sont associés à des vulnérabilités de la carte SIM prédéterminées.

15. Équipement selon la revendication 14, dans lequel :
l'interface utilisateur (105) de l'unité de détection et de prévention des vulnérabilités (102) est configurée pour envoyer une demande de vérification de la carte SIM (101) à l'unité de détection et de prévention des vulnérabilités (102);
l'unité de détection et de prévention de la vulnérabilité (102) est configurée pour envoyer un ensemble comprenant au moins une instruction proactive de vérification de la vulnérabilité à la carte SIM (101) en réponse à la réception de la demande de vérification de la carte SIM (101) à partir de l'interface utilisateur (105) ;
la carte SIM (101) est configurée pour exécuter l'ensemble comprenant au moins une instruction proactive de vérification de la vulnérabilité et envoyer un ensemble comprenant au moins un résultat de vérification de la vulnérabilité correspondant à l'ensemble comprenant au moins une instruction proactive de vérification de la vulnérabilité à l'unité de détection et de prévention de la vulnérabilité (102) ;
l'unité de détection et de prévention des vulnérabilités (102) est configurée pour analyser l'ensemble comprenant au moins un résultat de contrôle des vulnérabilités afin de déterminer s'il existe des vulnérabilités de la carte SIM prédéterminées ; et
l'interface utilisateur (105) de l'unité de détection et de prévention des vulnérabilités (102) est configurée pour envoyer un message d'avertissement à l'utilisateur concernant les vulnérabilités de la carte SIM en réponse à la détermination de l'existence de vulnérabilités prédéterminées de la carte SIM.

16. Équipement selon la revendication 15, dans lequel l'équipement est en outre configuré pour, avant que l'unité de détection et de prévention de la vulnérabilité (102) n'effectue l'analyse, déterminer s'il existe un événement d'installation de la carte SIM (101) dans l'équipement mobile (100) ; et
envoyer, par l'unité de détection et de prévention des vulnérabilités (102), l'ensemble comprenant au moins une instruction proactive de contrôle des vulnérabilités à la carte SIM (101) en réponse à la détermination de l'existence d'un événement d'installation de la carte SIM (101) dans l'équipement mobile (100).

17. Équipement selon la revendication 13, dans lequel l'unité de détection et de prévention des vulnérabilités (102) analyse au moins un des événements, données et instructions reçus pour déterminer si les événements, données ou instructions sont associés à des vulnérabilités de la carte SIM prédéterminées à l'aide d'un modèle d'intelligence artificielle (IA) utilisant l'un des événements, données et instructions comme données d'entrée.

18. Équipement selon la revendication 15 ou 16, dans lequel l'unité de détection et de prévention des vulnérabilités (102) analyse l'ensemble comprenant au moins un résultat de contrôle de vulnérabilité pour déterminer s'il existe des vulnérabilités de la carte SIM prédéterminées à l'aide d'un modèle d'intelligence artificielle (IA) utilisant l'ensemble comprenant au moins un résultat de contrôle de vulnérabilité comme données d'entrée.

19. Équipement selon la revendication 17 ou 18, dans lequel le modèle d'intelligence artificielle est un modèle de régression linéaire, un modèle d'arbre (Gradient) de boosting, un modèle de correspondance de motifs, un modèle de machine à vecteur de support (SVM), un modèle d'apprentissage profond.

20. Système de détection et de prévention des vulnérabilités dans une carte SIM (101), le système comprenant :
un équipement mobile (100) selon l'une des revendications 13 à 19 ; et
un serveur, dans lequel
l'unité de détection et de prévention des vulnérabilités (102) est configurée pour collecter un ensemble de données comprenant au moins l'un des événements, des données, des instructions, des instructions proactives de contrôle des vulnérabilités et des résultats du contrôle des vulnérabilités, et pour envoyer l'ensemble de données au processeur d'application (104) ou au processeur de bande de base (103) pour qu'il le transmette au serveur ; et
le serveur est configuré pour former le modèle d'IA sur la base de l'ensemble de données.

21. Système selon la revendication 20, dans lequel :
le serveur est configuré pour envoyer le modèle d'IA entraîné au processeur d'application (104) ou au processeur de bande de base (103) ;
l'interface utilisateur (105) de l'unité de détection et de prévention des vulnérabilités (102) est configurée pour envoyer à l'utilisateur une demande de confirmation de l'activation de la mise à jour du modèle d'IA envoyé à l'unité de détection et de prévention des vulnérabilités (102) ; et
l'unité de détection et de prévention des vulnérabilités (102) est configurée pour mettre à jour le modèle d'IA dans l'unité de détection et de prévention des vulnérabilités (102) en réponse à la confirmation par l'utilisateur de l'activation de la mise à jour du modèle d'IA envoyé à l'unité de détection et de prévention des vulnérabilités (102).

22. Système selon la revendication 21, dans lequel l'unité de détection et de prévention des vulnérabilités (102) effectue automatiquement la mise à jour du modèle d'IA dans l'unité de détection et de prévention des vulnérabilités (102).

23. Système selon la revendication 21 ou 22, dans lequel la mise à jour du modèle d'IA peut être effectuée par un mécanisme OTA (Over-The-Air) ou par l'Internet.
